# EUROPÄISCHE PATENTSCHRIFT

(11) **EP 2 502 889 B1**
(45) Veröffentlichungstag und Bekanntmachung des Hinweises auf die Patenterteilung: **29.10.2014**
(21) Anmeldenummer: 11159057.6
(22) Anmeldetag: 21.03.2011
(51) Int. Cl.: C04B 14/42, C04B 28/02, C04B 28/14, C04B 20/00, C04B 20/10, C04B 111/34

(54) **Selbstheilender Baustoff**
Self-healing construction material
Matériau de construction auto-curatif

(43) Veröffentlichungstag der Anmeldung: 26.09.2012
(73) Patentinhaber: Knauf Gips KG, 97346 Iphofen (DE)
(72) Erfinder: Frey-Matsuyama, Shoko Dr., 80336 München (DE); Hummel, Hans-Ulrich Prof., 97346 Iphofen (DE)
(74) Vertreter: Von Kreisler Selting Werner - Partnerschaft von Patentanwälten und Rechtsanwälten mbB

(56) Entgegenhaltungen:
- WO-A1-2007/003879
- WO-A2-2007/005657
- JP-A- 10 194 806
- US-A1- 2008 047 472
- VICTOR C LIA ET AL: "Feasibility study of a passive smart self-healing cementitious composite", COMPOSITES PART B: ENGINEERING, ELSEVIER, UK , Bd. 29, Nr. 6 1. November 1998 (1998-11-01), Seiten 819-827, XP008141278, ISSN: 1359-8368 Gefunden im Internet: URL:http://www.sciencedirect.com/science/a rticle/pii/S1359836898000341
- CAROLYN DRY ET AL: "Three-part methylmethacrylate adhesive system as an internal delivery system for smart responsive concrete", SMART MATERIALS AND STRUCTURES, IOP PUBLISHING LTD., BRISTOL, GB, Bd. 5, Nr. 3, 1. Juni 1996 (1996-06-01), Seiten 297-300, XP020071816, ISSN: 0964-1726, DOI: 10.1088/0964-1726/5/3/007
- CAROLYN DRY ET AL: "Matrix cracking repair and filling using active and passive modes for smart timed release of chemicals from fibers into cement matrices", SMART MATERIALS AND STRUCTURES, IOP PUBLISHING LTD., BRISTOL, GB, Bd. 3, Nr. 2, 1. Juni 1994 (1994-06-01), Seiten 118-123, XP020072194, ISSN: 0964-1726, DOI: 10.1088/0964-1726/3/2/006
- CAROLYN M DRY: "Smart multiphase composite materials which repair themselves by a release of liquids which become solids", SMART STRUCTURES AND MATERIALS 1994: SMART MATERIALS : 14-16 FEBRUARY 1994, ORLANDO, FLORIDA / SPONSORED BY SPIE, THE INTERNATIONAL SOCIETY FOR OPTICAL ENGINEERING, SOCIETY OF PHOTO-OPTICAL INSTRUMENT , Bd. 2189 14. Februar 1994 (1994-02-14), Seiten 63-70, XP008141280, DOI: DOI:10.1117/12.174086 ISBN: 978-0-8194-1484-7 Gefunden im Internet: URL:http://spiedigitallibrary.org/proceedi ngs/resource/2/psisdg/2189/1?is Authorized=no [gefunden am 2004-11-15]
- DRY C M: "alteration of matrix permeability, pore and crack structure by the time release of internal chemicals", ADVANCES IN CEMENTITIOUS MATERIALS : PROCEEDINGS OF THE CONFERENCE ON ADVANCES IN CEMENTITIOUS MATERIALS,..., JULY 22-26, 1990, GAITHERSBURG, MD, WESTERVILLE, OHIO : AMERICAN CERAMIC SOCIETY, US, 22. Juli 1990 (1990-07-22), Seiten 729-768, XP008141279, ISBN: 0-944904-33-5
- CAROLYN DRY: "Passive smart materials for sensing and actuation", JOURNAL OF INTELLIGENT MATERIAL SYSTEMS AND STRUCTURES, TECHNOMIC PUBL., LANCASTER, PA, US, Bd. 4, 1. Januar 1993 (1993-01-01), Seiten 420-425, XP008141287, ISSN: 1045-389X
- CAROLYN M DRY: "Adhesive liquid core optical fibers for crack detection and repairs in polymer and concrete matrices", SMART STRUCTURES AND MATERIALS 1995: SMART SENSING, PROCESSING, AND INSTRUMENTATION, SOCIETY OF PHOTO-OPTICAL INSTRUMENTATION ENGINEERS, Bd. 2444, 20. April 1995 (1995-04-20), Seiten 410-413, XP008141277, DOI: 10.1117/12.207703

## Beschreibung

Die vorliegende Erfindung betrifft Baustoffe mit selbstheilenden Eigenschaften.

Baustoffe dienen der Errichtung von Bauwerken und Gebäuden. Unterschiedlichste Baustoffe auf Basis von organischen Materialien, beispielsweise Holz, oder anorganischen Materialien, beispielsweise Zement, Klinker, Gips, etc. sind dem Fachmann in großem Umfang bekannt.

Im eingebauten Zustand sind Baustoffe erheblichen mechanischen Belastungen ausgesetzt. Diese können sich beispielsweise durch mechanische Belastungen und minimale Bauteilbewegungen sowie durch Temperaturschwankungen oder Trocknungsvorgänge in dem betroffenen Baustoff ergeben.

Besonders große Belastungen erfahren Baustoffe durch Windlastbeanspruchungen oder durch Untergrundbewegungen bei Erdbeben etc.

In ungünstigen Fällen und bei großer Beanspruchung treten daher in Baumaterialien Risse auf. Bekannte Formen sind beispielsweise auch Setzrisse, die grundsätzlich sowohl das optische Erscheinungsbild als auch die Stabilität eines Baumaterials beeinträchtigen können. Üblicherweise werden solche Risse verklebt oder verspachtelt.

Diese Arbeiten kommen a priori immer erst dann zum Einsatz, wenn die Risse eine entsprechende Größe haben und augenfällig sind.

Außerdem sind die Reparaturmaßnahmen im Bestand umständlich, zeitaufwändig und kostspielig.

Im Falle von ummantelten plattenförmigen Baustoffen kann ein Riss vom Ummantelungsmaterial verborgen werden. So ist bereits eine Destabilisierung der Baustoffe gegeben, makroskopisch aber nicht zu erkennen.

D1, Victor C. Li et al. in Composites Part B 29B (1998), Seiten 819-827, beschreiben eine passive, selbstheilende Zementzusammensetzung, bei der Hohlglasfasern verwendet werden, die lufthärtende Chemikalien enthalten.

D2, WO 2007/005657, betrifft ein Laminat, bei dem Hohlfasern in eine Matrix eingebettet sind, die aushärtbare Stoffe enthalten.

Aufgabe der vorliegenden Erfindung war es, zumindest einige der Nachteile des Standes der Technik zu überwinden.

Gelöst wird die Aufgabe durch einen glasfaserhaltigen Baustoff, enthaltend ein anorganisches Bindemittel und Glasfasern, dadurch gekennzeichnet, dass die Glasfasern einen reaktiven Zweikomponentenklebstoff umfassend eine erste Komponente und eine zweite Komponente enthalten, wobei die erste und zweite Komponente jeweils in Kapillaren eingeschlossen sind, die eine Länge von 0,1 bis 10 mm aufweisen.

Der Baustoff enthält neben einem anorganischen Bindemittel wie beispielsweise Calciumsulfat oder Zement Glasfasern, wobei die Glasfasern ein reaktiven Zweikomponentenklebstoff enthalten. Die Komponenten sind räumlich getrennt enthalten, so dass zu diesem Zeitpunkt keine Reaktion oder Aushärtung des Klebstoffs eintritt. Wenn Risse auftreten, führt dies zu einer Beschädigung der Glasfasern und folglich zu einer Freisetzung der Komponenten des Zweikomponentenklebstoffs. Durch die anschließende Aushärtung tritt eine mechanische Verfestigung ein.

Glasfasern führen schon durch ihre Anwesenheit zu einer Stabilitätserhöhung. Die Möglichkeit, im Falle eines Risses durch einen Bruch der Glasfasern den Baustoff zu stabilisieren, ist ein weiterer Effekt, der die Langzeitstabilität begünstigt.

Bevorzugt sind die erste und die zweite Komponente des reaktiven Zweikomponentenklebers gemeinsam in einer Glasfaser enthalten, d.h. die Glasfaser enthält räumlich getrennt eine Füllung mit der ersten und der zweiten Komponenten.

Dazu werden die erste und die zweite Komponente in Kapillaren eingeschlossen.

In einer besonders bevorzugten Ausführungsform weist die Glasfasern mindestens zwei Kapillare auf, wobei in einer Kapillare die erste Komponente und in einer zweiten Kapillare die zweite Komponente enthalten ist.

Insbesondere können die beiden Kapillaren parallel angeordnet sein.

Glasfasern mit räumlich getrennten Zweikomponentenklebstoffen können hergestellt werden aus Hohlglasfasern; solche sind beispielsweise von der Firma Suter-Kunststoffe AG, Fraubrunnen, Schweiz erhältlich. Verfahren zu ihrer Herstellung sind beispielsweise beschrieben in DE OS 26 52 690.

Die Hohlfasern können gefüllt werden, in dem ein Ende der Hohlfaser in eine Flüssigkeit eingetaucht wird. Kapillarkräfte halten dann die Flüssigkeit im Inneren der Hohlfaser. Grundsätzlich ist es möglich, dass die Fasern nach der Befüllung abgeschmolzen werden.

Als Zweikomponentenklebstoffe kommen eine Vielzahl von Substanzen in Frage, die dem Fachmann grundsätzlich bekannt sind. Besonders geeignete Substanzen sind ausgewählt aus der Gruppe bestehen aus Methylmethacrylat-Klebstoffen, Silikonklebstoffen, Epoxidharzen, Polyurethan-Klebstoffen.

Als Baustoff eignen sich insbesondere plattenförmige Baustoffe und Estrichmaterialien. Typische plattenförmige Baustoffe sind z.B. Gipskarton oder Gipsfaserplatten. Als Estrich eignet sich insbesondere ein Calciumsulfat-Estrich oder ein Zement-Estrich.

Bevorzugt enthalten die erfindungsgemäßen Baustoffe 0,5 bis 2,5 Gew.-% Glasfasern (im abgebundenen, trockenen Zustand).

Die Länge der Kapillaren liegt im Bereich von 0,1 bis 10 mm, bevorzugt 0,5 bis 6 µm. Innendurchmesser von 3 bis 7 µm, bevorzugt 5 bis 6 µm haben sich besonders bewährt. Die Außendurchmesser betragen z.B. 10 bis 12 µm.

Die erfindungsgemäß eingesetzten Glasfasern enthalten die Komponenten des Zweikomponentenklebers. Die Menge an den Komponenten in der Glasfaser ist durch das Hohlvolumen festgelegt.

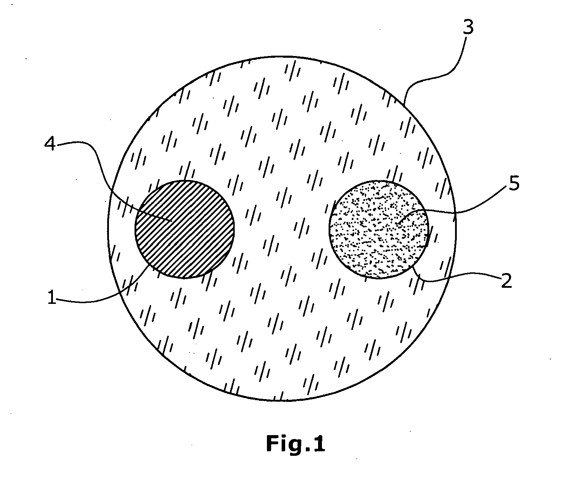

Figur 1 zeigt eine Abbildung der erfindungsgemäß eingesetzten Glasfasern im Querschnitt. Die Glasfaser 3 enthält in ihrem Inneren 2 im Wesentlichen parallele Kapillaren 1 und 2, die mit einer ersten Komponente 4 und einer zweiten Komponente 5 eines Zweikomponentenklebstoffs gefüllt sind.

Figuren 2 und 3 zeigen die Ergebnisse von Biegefestigkeitsuntersuchungen einer erfindungsgemäßen Platte bzw. einer Gipskartonplatte des Standes der Technik.

Die Erfindung wird durch die nachfolgenden Beispiele näher erläutert.

### Beispiel 1: Gipskartonplatte

Zur Herstellung einer Gipskartonplatte wurden einer Gipsslurry 1 Gew.-% gefüllter Hohlfasern zugesetzt.

Hieraus wurden in üblicher Weise Gipskartonplatten gefertigt, indem die Gipsslurry auf eine erste Kartonlage aufgebracht wurde und dann mit einer zweiten Kartonlage abgedeckt wurde. Nach dem Beginn des Abbindens wurde die Bahn geschnitten und die Platten in einem Etagentrockner getrocknet.

Im Vergleich zu einer Platte ohne Zusatz der erfindungsgemäß verwendeten Glasfasern mit Zweikomponentenklebstoff zeigen die erfindungsgemäßen Platten folgende Eigenschaften: Bei Durchbiegung kommt es zu Mikrorißbildung im Plattenkern, wobei der Karton die Risse kaschiert und der Platte eine Grundfestigkeit verleiht. Bei den Platten mit Hohlfasern werden die Mikrorisse nach kurzer Zeit verschlossen. Bei der Wiederholung des Biegeversuchs verhält sich die Platte wie eine unbeschädigte Platte.

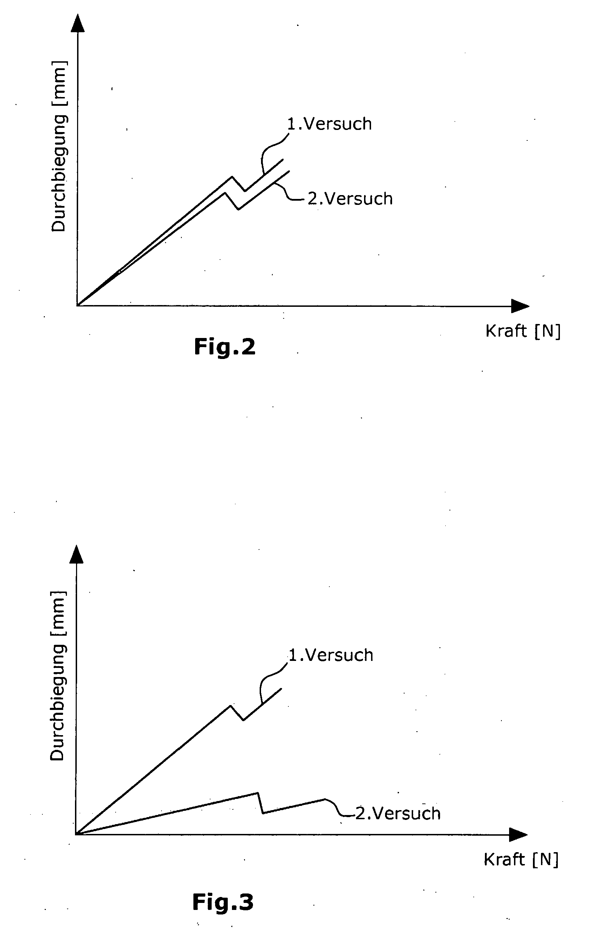

Figur 2 zeigt einen Biegefestigkeitstest der erfindungsgemäßen Platte. Die Platte wird an 2 Enden aufgelegt und in der Mitte durchgebogen. Die Durchbiegung bezogen auf die eingesetzte Kraft wird gemessen. Die Platte biegt durch bis der Kern Mikrorisse aufweist. Anschließend wird die Platte auf einen ebenen Untergrund gelegt und kann für 30 min ruhen. Bei einer Wiederholung des Versuchs zeigt die Platte praktisch das gleiche Durchbiegungsverhalten.

Im Vergleich dazu zeigt Figur 3, dass bei einer Platte des Standes der Technik im zweiten Durchbiegungsversuch die Platte aufgrund der Vorschädigung wesentlich leichter durchzubiegen ist.

### Beispiel 2: Fließestrich

Ein gipsgebundener Fließestrich mit 1 Gew.-% gefüllter Hohlfasern wurde hergestellt und zeigt eine gute Festigkeit.

## Patentansprüche

1. Glasfaserhaltiger Baustoff, enthaltend ein anorganisches Bindemittel und Glasfasern, **dadurch gekennzeichnet, dass** die Glasfasern einen reaktiven Zweikomponentenklebstoff umfassend eine erste Komponente und eine zweite Komponente enthalten, wobei die erste und zweite Komponente jeweils in Kapillaren eingeschlossen sind, die eine Länge von 0,1 bis 10 mm aufweisen.

2. Glasfaserhaltiger Baustoff nach Anspruch 1, **dadurch gekennzeichnet, dass** das anorganische Bindemittel ausgewählt wird aus der Gruppe der Calciumsulfate und Zemente.

3. Glasfaserhaltiger Baustoff nach einem der Ansprüche 1 oder 2, **dadurch gekennzeichnet, dass** eine erste Komponente des reaktiven Zweikomponentenklebers und eine zweite Komponente des reaktiven Zweikomponentenklebers in einer Glasfaser enthalten sind.

4. Glasfaserhaltiger Baustoff nach einem der Ansprüche 1 bis 3, **dadurch gekennzeichnet, dass** die Glasfasern mindestens zwei Kapillare aufweisen, wobei in einer Kapillare die erste Komponente und in einer zweiten Kapillare die zweite Komponente enthalten ist.

5. Glasfaserhaltiger Baustoff nach einem der Ansprüche 1 bis 4, **dadurch gekennzeichnet, dass** der Zweikomponentenklebstoff ausgewählt wird aus der Gruppe bestehen aus Methylmethacrylat-Klebstoffen, Silikonklebstoffen, Epoxidharzen, Polyurethan-Klebstoffen.

6. Glasfaserhaltiger Baustoff nach einem der Ansprüche 1 bis 5, **dadurch gekennzeichnet, dass** der Baustoff ein plattenförmiger Baustoff oder ein Estrichmaterial ist.

7. Glasfaserhaltiger Baustoff nach Anspruch 6, **dadurch gekennzeichnet, dass** der plattenförmige Baustoff eine Gipskarton- oder eine Gipsfaserplatte ist.

8. Glasfaserhaltiger Baustoff nach Anspruch 6, **dadurch gekennzeichnet, dass** der Estrich ein Calciumsulfat-Estrich oder ein Zement-Estrich ist.

## Claims

1. A glass-fiber-containing building material, containing an inorganic binder and glass fibers, **characterized in that** said glass fibers contain a reactive two-component adhesive comprising a first component and a second component, wherein said first and second components are each enclosed in capillaries having a length of from 0.1 to 10 mm.

2. The glass-fiber-containing building material according to claim 1, **characterized in that** said inorganic binder is selected from the group of calcium sulfates and cements.

3. The glass-fiber-containing building material according to either of claims 1 or 2, **characterized in that** a first component of said reactive two-component adhesive and a second component of said reactive two-component adhesive are contained in a glass fiber.

4. The glass-fiber-containing building material according to any of claims 1 to 3, **characterized in that** said glass fibers have at least two capillaries, wherein said first component is contained in one capillary and said second component is contained in a second capillary.

5. The glass-fiber-containing building material according to any of claims 1 to 4, **characterized in that** said two-component adhesive is selected from the group consisting of methyl methacrylate adhesives, silicone adhesives, epoxy resins, polyurethane adhesives.

6. The glass-fiber-containing building material according to any of claims 1 to 5, **characterized in that** said building material is a board-shaped building material or a screed material.

7. The glass-fiber-containing building material according to claim 6, **characterized in that** said board-shaped building material is a gypsum plasterboard or a gypsum fiberboard.

8. The glass-fiber-containing building material according to claim 6, **characterized in that** said screed is a calcium sulfate screed or a cement screed.

## Revendications

1. Matériau de construction contenant des fibres de verre, contenant un liant inorganique et des fibres de verre, **caractérisé en ce que** les fibres de verre comprenant un adhésif bicomposant réactif contiennent un premier composant et un deuxième composant, le premier et le deuxième composant étant chacun inclus dans des capillaires qui présentent une longueur de 0,1 à 10 mm.

2. Matériau de construction contenant des fibres de verre selon la revendication 1, **caractérisé en ce que** le liant inorganique est sélectionné dans le groupe des sulfates de calcium et des ciments.

3. Matériau de construction contenant des fibres de verre selon la revendication 1 ou 2, **caractérisé en ce qu'**un premier composant de l'adhésif bicomposant réactif et un deuxième composant de l'adhésif bicomposant réactif sont contenus dans une fibre de verre.

4. Matériau de construction contenant des fibres de verre selon l'une des revendications 1 à 3, **caractérisé en ce que** les fibres de verre présentent au moins deux capillaires, le premier composant étant contenu dans un capillaire et le deuxième composant étant contenu dans un deuxième capillaire.

5. Matériau de construction contenant des fibres de verre selon l'une des revendications 1 à 4, **caractérisé en ce que** l'adhésif bicomposant est sélectionné dans le groupe constitué d'adhésifs au méthacrylate de méthyle, d'adhésifs au silicone, de résines époxy, d'adhésifs au polyuréthane.

6. Matériau de construction contenant des fibres de verre selon l'une des revendications 1 à 5, **caractérisé en ce que** le matériau de construction est un matériau de construction en forme de plaques ou un matériau de chape.

7. Matériau de construction contenant des fibres de verre selon la revendication 6, **caractérisé en ce que** le matériau de construction en forme de plaques est une plaque de plâtre cartonné ou une plaque de plâtre armé de fibres.

8. Matériau de construction contenant des fibres de verre selon la revendication 6, **caractérisé en ce que** la chape est une chape en sulfate de calcium ou une chape en ciment.
